(19) Europäisches Patentamt
European Patent Office
Office européen des brevets

(11) EP 0 603 664 B1

(12) **EUROPÄISCHE PATENTSCHRIFT**

(45) Veröffentlichungstag und Bekanntmachung des Hinweises auf die Patenterteilung:
**18.03.1998 Patentblatt 1998/12**

(51) Int Cl.$^6$: **C08J 3/00**, C08L 69/00, C08L 55/02, C08L 51/04, C08G 64/30

(21) Anmeldenummer: **93119862.6**

(22) Anmeldetag: **09.12.1993**

(54) **Herstellung von Blendsystemen durch Kondensation von Oligocarbonaten in Gegenwart von Masse-ABS**

Preparation of blend systems by condensation of oligocarbonates in the presence of mass-ABS

Préparation de systèmes de mélange par condensation d'oligocarbonates en présence de masse-ABS

(84) Benannte Vertragsstaaten:
**BE DE ES FR IT NL**

(30) Priorität: **22.12.1992 DE 4243525**

(43) Veröffentlichungstag der Anmeldung:
**29.06.1994 Patentblatt 1994/26**

(73) Patentinhaber: **BAYER AG**
**51368 Leverkusen (DE)**

(72) Erfinder:
- **Nielinger, Werner, Dr.**
  **D-47802 Krefeld (DE)**
- **Kauth, Hermann, Dr.**
  **D-47829 Krefeld (DE)**
- **Wittmann, Dieter, Dr.**
  **D-51061 Köln (DE)**
- **Freitag, Dieter, Dr.**
  **D-47802 Krefeld (DE)**
- **Idel, Karsten-Josef, Dr.**
  **D-47802 Krefeld (DE)**

(56) Entgegenhaltungen:
**EP-A- 0 270 811**
**EP-A- 0 566 313**
**DE-A- 1 570 617**
**DE-A- 4 039 023**
**US-A- 4 386 186**
**US-A- 4 526 926**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 603 664 B1

Printed by Jouve, 75001 PARIS (FR)

## Beschreibung

Gegenstand der vorliegenden Erfindung ist ein Verfahren zur Herstellung von Polymerblends aus Polycarbonat und Masse-ABS durch Aufkondensation von Oligocarbonat in Gegenwart von Masse-ABS.

Die Aufkondensation von Oligocarbonaten zu Polycarbonaten ist bereits bekannt (vgl. EP-A 432 580).

Die Herstellung von Thermoplastblends erfolgt üblicherweise durch Vermischung und Homogenisierung der Komponenten in der Schmelze. Einige Thermoplastblends sind bis heute auf diesem Wege jedoch nicht zugänglich, da die Differenz der Verarbeitungstemperaturen zu groß ist und somit eine gemeinsame Compoundierung nur unter Schädigung eines oder mehrerer Blendpartner möglich ist. Bei einer solchen Verfahrensweise kann durch die thermische Schädigung des einen Blendpartners das Gesamteigenschaftsprofil des resultierenden Blends negativ beeinflußt werden.

Thermoplastische Formmassen aus Polycarbonaten und ABS-Polymerisaten sind bekannt. So beschreibt beispielsweise DE 1 170 141 die gute Verarbeitbarkeit von Formmassen aus Polycarbonaten und Pfropfpolymerisaten von Monomermischungen aus Acrylnitril und einem aromatischen Vinylkohlenwasserstoff auf Polybutadien (Emulsions-ABS).

Mischungen aus Polycarbonaten und ABS-Polymerisaten, wobei letztere nach dem Masse-Suspensions-Verfahren hergestellt wurden, sind nach US-Patent 3 852 393 zur Herstellung flammwidriger Formmassen geeignet.

Gemäß US-Patent 4 624 986 weisen Formmassen aus ABS-Polymerisaten, die nach dem Masse- oder Masse-Suspensions-Verfahren hergestellt wurden, und Polycarbonaten verbesserte Tieftemperatureigenschaften und verminderten Glanz auf.

Aufgrund ihrer günstigen Eigenschaften haben Blends aus Polycarbonaten und ABS-Polymerisaten in breitem Umfang Anwendungen im Kfz-Bereich (Innenraumelemente) und in der Datentechnik (Gehäuseteile) gefunden.

Da Polycarbonat und ABS im allgemeinen nur teilverträglich sind (insbesondere die technisch wichtigsten Vertreter Bisphenol A-Polycarbonat und ABS-Polymerisat), was Zweiphasigkeit zur Folge hat, ist zur vollständigen Dispergierung der Phasen eine hohe Scherung bzw. hohe Schmelzmischtemperatur erforderlich. Dies kann zu Produktschädigungen und Verfärbungen führen.

Es ist wünschenswert, die für manche Anwendungen nicht ausreichende Zähigkeit der Blends durch Verwendung höhermolekularer Polycarbonate weiter zu verbessern. Dem steht die hohe Schmelzviskosität solcher Polycarbonate entgegen.

Es wurde nun gefunden, daß man Blends aus Polycarbonat und ABS-Polymerisaten mit verbesserten Eigenschaften erhalt, indem man eine Mischung aus einem niedermolekularen Polycarbonat (Oligocarbonat) und einem dach einem Masse- oder Lösungsverfahren hergestellten ABS herstellt und das Oligocarbonat bei vermindertem Druck aufkondensiert.

Diese Blends zeichnen sich gegenüber Mischungen, die aus Oligocarbonaten und ABS-Pfropfpolymerisaten, welche nach dem Emulsions- oder Masse-Suspensions-Polymerisationsverfahren hergestellt wurden, durch verbesserte Zähigkeitswerte und ausgezeichnete Thermostabilität aus.

Gegenstand der Erfindung ist also ein Verfahen zur Herstellung von Blends aus Polycarbonaten und ABS-Pfropfpolymerisaten, die nach dem Masse- oder Lösungspolymerisationsverfahren hergestellt wurden, dadurch gekennzeichnet, daß Oligocarbonate (A) mit mittleren Molekulargewichten ($\overline{M}_w$) < 22.000 und ABS-Pfropfpolymerisate (B) in der Schmelze gemischt und die Oligocarbonate dabei bei vermindertem Druck zu hochmolekularem Polycarbonat aufkondensiert werden.

Besonders vorteilhaft bei diesem Verfahren ist, daß Mischung und Aufkondensation in einem Batch-Verfahren oder, bevorzugt kontinuierlich, in einem Vakuum-Ausdampfextruder gegebenenfalls ohne Isolierung der Oligocarbonate durchgeführt werden können.

### Komponente A

Die Herstellung der Oligocarbonate ist bekannt. Sie erfolgt durch Reaktion von Diphenolen der Formel (I) mit Diarylcarbonaten bei Temperaturen von 150 bis 350°C (vgl, z.B. EP-A 432 580). Bevorzugtes Diarylcarbonat ist Diphenylcarbonat. Das Verhältnis von Diphenolen zu Diarylcarbonaten beträgt 1:0,95 bis 1:1,75.

Zur Beschleunigung der Reaktion können Katalysatoren eingesetzt werden. Geeignete Katalysatoren sind basische organische und/oder anorganische Verbindungen, z.B. (Erd-)alkalimetallhydroxide, -alkoholate, -salze, -hydride, Pyridin. Es können auch phosphororganische Verbindungen wie Triphenylphosphan, Triphenylphosphanoxid oder metallorganische Verbindungen wie z.B. Dibutylzinnoxid eingesetzt werden.

Geeignete Oligocarbonate (A) sind aus Diphenolen der Formeln (I) aufgebaut:

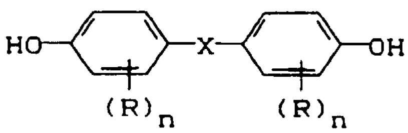

(I)

mit

X = $C_1$-$C_8$-Alkyliden oder $C_5$-$C_{12}$-Cycloalkyliden, -S-, -$SO_2$- oder einer Einfachbindung,

R = Methyl, Chlor oder Brom und

n = Null, 1 oder 2.

Bevorzugte Diphenole sind z.B.:

4,4-Dihydroxydiphenyl,
4,4'-Dihydroxydiphenylsulfid,
1,1-Bis-(4-hydroxyphenyl)-cyclohexan,
Bis-(4-hydroxyphenyl)-methan,
2,2-Bis-(4-hydroxyphenyl)-propan,
2,4-Bis-(4-hydroxyphenyl)-2-methylbutan,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl)-3,3,5-trimethylcyclohexan.

Besonders bevorzugte Diphenole aus den vorstehend genannten sind 2,2-Bis-(4-hydroxyphenyl)-propan und 1,1-Bis-(4-hydroxyphenyl)-3,3,5-trimethylcyclohexan.

Die Diphenole können sowohl einzeln als auch im Gemisch eingesetzt werden.

Die Oligocarbonate haben mittlere Molekulargewichte $\overline{M}w < 22.000$, vorzugsweise $\overline{M}w$ von 2.000 bis 20.000.

Komponente B

Das ABS-Pfropfpolymerisat (B) wird erhalten durch Pfropfpolymerisation von

B.1 50 bis 99 Gew.-Teilen einer Mischung aus

B.1.1 50 bis 99 Gew.-Teilen Styrol, α-Methylstyrol, kernsubstituierten Styrolen, $C_1$-$C_8$-Alkylmethacrylaten, oder Mischungen daraus, und

B.1.2 50 bis 1 Gew.-Teilen Acrylnitril, Methacrylnitril, $C_1$-$C_8$-Alkyl-methacrylaten, $C_1$-$C_8$-Alkyl-acrylaten, Maleinsäureanhydrid, N-Alkyl-oder N-Aryl-substituierten Maleinimiden oder Mischungen daraus, in Gegenwart von

B.2 1 bis 50 Gew.-Teilen, eines mit B.1.1 und B.1.2 copolymerisierbaren Kautschuks mit einer Glasübergangstemperatur < 10°C,

wobei das Pfropfpolymerisat (B) nach einem Masse- oder Lösungs-Polymerisationsverfahren hergestellt ist.

Das kautschukmodifizierte Pfropfpolymerisat (B) umfaßt ein statistisches (Co)polymerisat aus Monomeren gemäß B.1.1 und B.1.2, sowie einen mit dem statistischen (Co)polymerisat aus B.1.1 und B.1.2 gepfropften Kautschuk B.2, wobei die Herstellung von (B) in bekannter Weise nach einem Masse- oder Lösungs-Polymerisationsverfahren erfolgt,

wie z.B. in den US-PS 3 243 481, US-PS 3 509 237, US-PS 3 660 535, 4 221 833 und US-PS 4 239 863 beschrieben ist.

Beispiele für Monomere B.1.1 sind Styrol, α-Methylstyrol, p-Methylstyrol, p-Chlorstyrol, Methylmethacrylat, Beispiele für Monomere B.1.2 sind Acrylnitril, Methacrylnitril, Methylmethacrylat, n-Butylacrylat, t-Butylacrylat, Maleinsäureanhydrid und N-Phenyl-Maleinimid.

Bevorzugte Monomere B.1.1 sind Styrol, α-Methylstyrol und Methylmethacrylat, bevorzugte Monomere B.1.2 sind Acrylnitril, Maleinsäureanhydrid und Methylmethacrylat.

Besonders bevorzugte Monomere sind B.1.1 Styrol und B.1.2 Acrylnitril.

Für die kautschukmodifizierten Pfropfpolymerisate B. geeignete Kautschuke B.2 sind beispielsweise Dienkautschuke, EP(D)M-Kautschuk, also solche auf Basis Ethylen/Propylen und gegebenenfalls Dien, Acrylat-, Polyurethan-, Silikon-, Chloropren- und Ethylen/Vinylacetat-Kautschuke.

Bevorzugte Kautschuke B.2 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß B.1.1 und B.1.2), mit der Maßgabe, daß die Glasübergangstemperatur der Komponente B. 2 unterhalb 10°C, vorzugsweise unterhalb -10°C liegt. Besonders bevorzugt wird reiner Polybutadienkautschuk.

Die Komponente B.2 kann, falls erforderlich und wenn dadurch die Kautschukeigenschaften der Komponente B. nicht beeinträchtigt werden, zusätzlich noch geringe Mengen, üblicherweise weniger als 5 Gew.-%, vorzugsweise weniger als 2 Gew.-%, bezogen auf B.2, vernetzend wirkender ethylenisch ungesättigter Monomeren enthalten. Beispiele für solche vernetzend wirkenden Monomere sind Alkylendiol-di-(meth)-acrylate, Poly-ester-di-(meth)-acrylate, Divinylbenzol, Trivinylbenzol, Triallylcyanurat, Allyl-(meth)-acrylat, Diallylmaleat und Diallylfumarat.

Das kautschukmodifizierte Pfropfpolymerisat B. wird erhalten durch Pfropfpolymerisation von 50 bis 99, bevorzugt 65 bis 98, besonders bevorzugt 75 bis 97 Gew.-Teilen eines Gemisches aus 50 bis 99, bevorzugt 60 bis 95 Gew.-Teilen Monomeren gemäß B.1.1 und 1 bis 50, bevorzugt 5 bis 40 Gew.-Teilen Monomeren gemäß B.1.2 in Gegenwart von 1 bis 50, vorzugsweise 2 bis 35, besonders bevorzugt 3 bis 25 Gew.-Teilen der Kautschukkomponente B.2, wobei die Pfropfpolymerisation nach einem Masse- oder Lösungs-Polymerisationsverfahren durchgeführt wird.

Wesentlich bei der Herstellung der kautschukmodifizierten Pfropfpolymerisate B. ist, daß die Kautschukkomponente B.2 vor der Pfropfpolymerisation im Gemisch der Monomeren B.1.1 und B.1.2 in gelöster Form vorliegt. Die Kautschukkomponente B.2 darf also weder so stark vernetzt sein, daß eine Lösung in B.1.1 und B.1.2 unmöglich wird, noch darf B.2 vor Beginn der Pfropfpolymerisation bereits in Form diskreter Teilchen vorliegen. Die für die Produkteigenschaften von B. wichtige Teilchenmorphologie und zunehmende Vernetzung von B.2 bildet sich erst im Verlauf der Pfropfpolymerisation aus (siehe hierzu beispielsweise Ullmann, Enzyklopädie der technischen Chemie, Band 19, Seite 284 ff., 4. Auflage 1980).

Das statistische Copolymerisat aus B.1.1 und B.1.2 liegt üblicherweise im Polymerisat B. zu einem Teil auf den Kautschuk B.2 auf- oder eingepfropft vor, wobei dieses Pfropfmischpolymerisat diskrete Teilchen im Polymerisat B. ausbildet. Der Anteil des auf- oder eingepfropften Copolymerisats aus B.1.1 und B.1.2 am gesamten Copolymerisat aus B.1.1 und B.1.2 - also die Pfropfausbeute (= Gewichtsverhältnis der tatsächlich gepfropften zu den insgesamt verwendeten Pfropfmonomeren x 100, angegeben in %) - sollte dabei 2 bis 40 %, vorzugsweise 3 bis 30 %, besonders bevorzugt 4 bis 20 % betragen.

Der mittlere Teilchendurchmesser der resultierenden gepfropften Kautschukteilchen (ermittelt durch Auszählung an elektronenmikroskopischen Aufnahmen) liegt im Bereich von 0,05 bis 5 µm, vorzugsweise von 0,08 bis 3,0 µm.

Nach dem erfindungsgemäßen Verfahren werden die Blends aus Polycarbonat und ABS-Pfropfpolymerisaten (B), die nach dem Masse- oder Lösungspolymerisation hergestellt wurden, aus den oligomeren Polycarbonaten (A) in Gegenwart des ABS-Pfropfpolymerisates folgendermaßen hergestellt:

Man kondensiert die Oligomeren (A) bei Temperaturen von 200 bis 350°C in Gegenwart von (B) weiter auf. Die Kondensation kann in üblichen Reaktoren wie Rührkesseln, Dünnschichtverdampfern, Rührkesselkaskaden, Extrudern, Knetern, einfachen Scheibenreaktoren oder Hochviskosscheibenreaktoren durchgeführt werden. In einer bevorzugten Ausführung erfolgt die Aufkondensation in einem Vakuum-Ausdampfextruder bei einem Druck von 0,01 bis 100 mbar, vorzugsweise 0,05 bis 50 mbar.

Der Blendpartner (B) wird dabei in einer Menge von 0,1 bis 99,9 Gew.-%, vorzugsweise 10 bis 90 Gew.-%, insbesondere 25 bis 75 Gew.-% (bezogen auf 100 Gew.-% aus A + B) zugesetzt.

Die Blends aus Polycarbonat und ABS-Pfropfpolymerisat können weitere Thermoplasten wie z.B. SAN-Copolymerisate sowie übliche Zusätze wie z.B. Stabilisatoren, Pigmente, Fließhilfsmittel, Entformungsmittel, Antistatika oder Flammschutzmittel enthalten.

Die erfindunggemäßen Blendsysteme können zu Formkörpern verarbeitet werden, indem man sie beispielsweise auf einer Spritzgußmaschine, gegebenenfalls nach Zusatz von Additiven, zu verschiedenen Artikeln in bekannter Weise verarbeitet.

Die nach dem erfindungsgemäßen Verfahren hergestellten Produkte zeigen eine gute Eigenfarbe und sind lösungsmittelfrei. Insbesondere zeichnen sie sich durch gute Zähigkeit aus.

In den nachfolgenden Beispielen wird die relative Viskosität gemessen an 0,5 Gew.-%igen Lösung des Polycarbonats in Methylenchlorid.

Die Molmassen werden durch Gelpermeationschromatographie (GPC) ermittelt.

Beispiele

Herstellung eines Oligocarbonats aus 2,2-Bis-(4-hydroxyphenyl)-propan (Bisphenol A)

Man erhitzt in einem 25 l-Rührbehälter 5.130 g (22,5 Mol) 2,2-Bis-(4-hydroxyphenyl)-propan, 5.056 g (23,63 Mol) Diphenylcarbonat und 26,1 mg (0,001 Molprozent) Natriumphenolat innerhalb 15 Minuten auf 180°C. Bei einer Massetemperatur von 100°C legt man unter Rühren ein Vakuum von 100 mbar an. Die Temperatur wird 1 Stunde bei 180°C gehalten und freigesetztes Phenol über eine Kolonne abdestilliert. Im Verlaufe einer weiteren Stunde erhöht man die Temperatur auf 250°C, anschließend wird der Druck innerhalb 30 Minuten auf 10 mbar abgesenkt. Die weitere Kondensation erfolgt im Hochvakuum (1 mbar) bei 270°C. Nach Belüften mit Stickstoff wird das Oligocarbonat aus dem Kessel ausgetragen.

Die mittlere Molmasse (Gewichtsmittel) wurde unter Verwendung der gekoppelten Gelpermeationschromatographie/Fouriertransform-IR Analysenmethode bestimmt, wobei das Oligo- bzw. Polycarbonat im Wellenzahlenbereich von 1.768 bis 1.775 $cm^{-1}$ detektiert wurde. Nach dieser Methode wurde für das Oligocarbonat eine Gewichtsmittel von 16.800 g/mol gemessen.

Beispiel 1 (erfindungsgemäß)

Man compoundiert mit einem Ausdampfextruder (ZSK 32 der Firma Werner und Pfleiderer) 60 Teile des Oligocarbonats und 40 Teile Masse-ABS Magnum 3405® der Firma Dow bei einer Drehzahl von 100 U/min und einem Durchsatz von 4 kg/h. Die Massetemperatur beträgt 295°C, der Druck am Ausdampfdom 0,7 mbar.

Das Masse-ABS-Polymerisat enthält Acrylnitril, Butadien und Styrol im Verhältnis 22,0:10,2:67,9. Der mittlere Teilchendurchmesser beträgt 0,2 bis 2 µm, der Mikrogelgehalt in Aceton 20,4 Gew.-%.

Das mittlere Molekulargewicht (Gewichtsmittel) des erhaltenen Polycarbonats beträgt 29.500 g/mol.

Beispiel 2 (Vergleich)

Wie in Beispiel 1 beschrieben, compoundiert man 60 Teile des Oligocarbonats, 16 Teile eines Styrol/Acrylnitril-Copolymerisats mit einem Styrol/Acrylnitril-Verhältnis von 72:28 und einer Grenzviskosität ($\eta$) = 0,55 dl/g in Dimethylformamid bei 20°C und 24 Teile Emulsionspfropfpolymerisat einer Monomerenmischung von 45 Gewichtsteilen Styrol und Acrylnitril (Gewichtsverhältnis 72:28) auf 55 Gewichtsteile eines teilchenförmigen Polybutadienkautschuks (mittlerer Teilchendurchmesser $d_{50}$ = 0,4 µm, erhalten durch Emulsionspolymerisation (Herstellung gemäß DE-OS 3 738 143, analog zu Pfropfpolymerisat B II).

Die Massetemperatur bei der Compoundierung betrug 285°C. Die mittlere Molmasse des Polycarbonats ist 17.500 g/mol.

Es ist also mit dem Emulsionspfropfpolymerisat kein nennenswerter Aufbau des Molekulargewichtes des Oligocarbonats erfolgt.

Beispiel 3 (Vergleich)

Auf einem Doppelwellenextruder vom Typ ZSK 32 compoundiert man, ohne Hochvakuum anzulegen, 60 Teile Polycarbonat mit einer Molmasse von 24.900 g/mol und 40 Teile der Mischung aus 24 Teilen Emulsionspfropfpolymerisat und 16 Teilen Styrol/Acrylnitrilpolymerisat gemäß Beispiel 2. Die Massetemperatur bei der Compoundierung betrug 264°C, der Durchsatz 5 kg/h.

Die mittlere Molmasse des Polycarbonatanteils ist 19.800 g/mol (Abbau des eingesetzten Polycarbonats).

Wird der Versuch unter Zusatz eines Hitzestabilisators auf Basis eines Phosphorigsäureesters wiederholt, wird das Polycarbonat nicht abgebaut. Die Massetemperatur bei der Compoundierung beträgt 266°C, der Durchsatz 5 kg/h. Die mittlere Molmasse des Polycarbonatanteils betrug 26.000 g/mol.

Beispiel 4 (Vergleich)

Man compoundiert wie in Beispiel 3 60 Teile Polycarbonat mit einer Molmasse von 24.800 g/mol und 40 Teile Masse ABS Magnum 3405 der Firma Dow unter Zusatz des Hitzestabilisators. Die Massetemperatur war 264°C, der Durchsatz 5 kg/h. Das Molekulargewicht des Polycarbonatanteils betrug 24.400 g/mol(leichter Abbau).

Diese Mischung zeichnet sich gegenüber denen aus Beispiel 3 durch eine wesentlich hellere Farbe aus.

Die Kerbschlagzähigkeit der Produkte nach ISO 180 bei Raumtemperatur hatte folgende Werte:

| | |
|---|---|
| Beispiel 1 (erfindungsgemäß) | 74 kJ/m$^2$ |
| Beispiel 2 (Vergleich) | 35 kJ/m$^2$ |
| Beispiel 3 (Vergleich | |
| - ohne Stabilisator | 34 kJ/m$^2$ |
| - mit Stabilisator | 48 kJ/m$^2$ |
| Beispiel 4 (Vergleich) | 51 kJ/m$^2$ |

Beispiel 1 (erfindungsgemäß):

Oligocarbonat + Masse-ABS: hohe Zähigkeit

Beispiel 2 (Vergleich):

Oligocarbonat + Emulsions-ABS: kein Aufbau des Oligocarbonats, daher niedrige Zähigkeit

Beispiel 3 (Vergleich):

Hochmolekulares PC und Emulsions-ABS

- ohne Hitzestabilisator: Abbau des hochmolekularen PC
- mit Hitzestabilisator: praktisch kein Abbau, aber geringere Zähigkeit als erfindungsgemäßes Beispiel 1

Beispiel 4 (Vergleich):

Hochmolekulares PC + Masse-ABS: praktisch kein Abbau, aber niedrigere Zähigkeit, schlechte Farbe.

**Patentansprüche**

**1.** Verfahren zur Herstellung von Blends aus Polycarbonaten und ABS-Pfropfpolymerisaten, die nach dem Masse- oder Lösungspolymerisationsverfahren hergestellt werden, dadurch gekennzeichnet, daß Oligocarbonate (A) mit mittleren Molekulargewichten ($\overline{M}_w$) < 22.000 und ABS-Pfropfpolymerisate (B) in der Schmelze gemischt und dabei die Oligocarbonate zu hochmolekularem Polycarbonat aufkondensiert werden.

**2.** Verfahren gemäß Anspruch 1, dadurch gekennzeichnet, daß die Oligocarbonate aus Diphenolen der Formel (I) aufgebaut sind

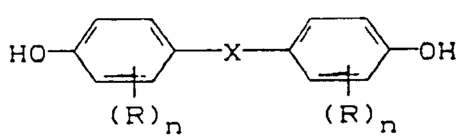

(I)

wobei

X für $C_1$-$C_8$-Alkyliden oder $C_5$-$C_{12}$-Cycloalkyliden, S, $SO_2$ oder eine Einfachbindung bedeutet,

R für Methyl, Chlor oder Brom und

n für 0, 1 oder 2 stehen,

und ein mittleres Molekulargewicht (Gewichtsmittel) $\overline{M}w$ von 2.000 bis 20.000 besitzen.

**3.** Verfahren gemäß Anspruch 1, wobei die ABS-Pfropfpolymerisate (B) erhalten werden durch Pfropfpolymerisation

nach einem Masse- oder Lösungspolymerisationsverfahren von

B.1 50 bis 99 Gew.-Teilen einer Mischung aus

B.1.1 50 bis 99 Gew.-Teilen Styrol, α-Methylstyrol, kernsubstituierten Styrolen, $C_1$-$C_8$-Alkyl-methacrylaten, oder Mischungen daraus, und

B.1.2 50 bis 1 Gew.-Teilen Acrylnitril, Methacrylnitril, $C_1$-$C_8$-Alkyl-methacrylaten, $C_1$-$C_8$-Alkyl-acrylaten, Maleinsäureanhydrid, N-Alkyl-oder N-Aryl-substituierten Maleinimiden oder Mischungen daraus, in Gegenwart von

B.2 1 bis 50 Gew.-Teilen, eines mit B.1.1 und B.1.2 copolymerisierbaren Kautschuks mit einer Glasübergangstemperatur < 10°C.

**4.** Verfahren gemäß Anspruch 1, dadurch gekennzeichnet, daß das ABS-Pfropfpolymerisat (B) in einer Menge von 0,1 bis 99,9 Gew.-% (bezogen auf 100 Gew.-% aus A + B) zugesetzt wird.

**5.** Verfahren gemäß Anspruch 1, dadurch gekennzeichnet, daß das ABS-Pfropfpolymerisat (B) in einer Menge von 10 bis 90 Gew.-% (bezogen auf 100 Gew.-% aus A + B) zugesetzt wird.

**6.** Verfahren gemäß Anspruch 1, dadurch gekennzeichnet, daß Komponente B.2 Polybutadien ist.

**7.** Polymerblends aus Polycarbonat und ABS-Pfropfpolymerisat (B), hergestellt nach dem Verfahren gemäß der Ansprüche 1 bis 7.

## Claims

**1.** A process for producing blends of polycarbonates and ABS graft polymers, the latter being produced by the mass or solution polymerization process, characterized in that oligocarbonates (A) having an average molecular weight ($\overline{M}_w$)< 22,000 and ABS graft polymers (B) are mixed in the melt, and in the process the oligocarbonates are condensed under reduced pressure to form high molecular weight polycarbonate.

**2.** A process according to claim 1, characterized in that the oligocarbonates are synthesized from diphenols corresponding to formula (I)

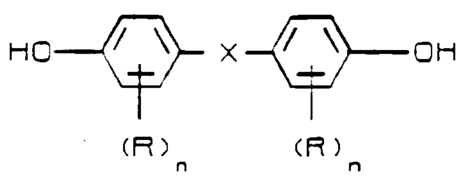

(I)

where

X represents a $C_1$-$C_8$-alkylidene or a $C_5$-$C_{12}$-cycloalkylidene, S, $SO_2$, or a single bond,

R represents methyl, chlorine or bromine, and

n is 0, 1 or 2,

and have an average molecular weight (weight average) $\overline{M}_w$ from 2,000 to 20,000.

**3.** A process according to claim 1, wherein the ABS graft polymers (B) are obtained by graft polymerization in a mass- or solution polymerization process from

B.1 50 to 99 parts by weight of a mixture comprising

B.1.1 50 to 99 parts by weight of styrene, α-methyl styrene, styrenes with substituents in the aromatic ring, $C_1$-$C_8$-alkyl methacrylates, or mixtures thereof, and

B.1.2 1 to 50 parts by weight of acrylonitrile, methacrylonitrile, $C_1$-$C_8$-alkyl methacrylates, $C_1$-$C_8$-alkyl acrylates, maleic anhydride, N-alkyl or N-aryl substituted maleic imides or mixtures thereof, in the presence of

B.2 1 to 50 parts by weight of a rubber which is copolymerizable with B.1.1 and B.1.2 and which has a glass transition temperature < 10°C.

**4.** A process according to claim 1, characterized in that the ABS graft polymer (B) is added in an amount from 0.1 to 99.9 weight % (based on 100 weight % A + B).

**5.** A process according to claim 1, characterized in that the ABS graft polymer (B) is added in an amount from 10 to 90 weight % (based on 100 weight % A + B).

**6.** A process according to claim 1, characterized in that component B.2 is polybutadiene.

**7.** Polymer blends comprising polycarbonate and ABS graft polymer (B), produced by the process according to claims 1 to 7.

**Revendications**

**1.** Procédé pour la préparation de mélanges constitués par des polycarbonates et par des polymères greffés de type ABS qui ont été préparés conformément au procédé de polymérisation en masse ou en solution, caractérisé en ce qu'on mélange, dans la masse en fusion, des oligocarbonates A possédant des poids moléculaires moyens ($\overline{M}w$) inférieurs à 22.000 et des polymères greffés (B) de type ABS, et on soumet en l'occurrence les oligocarbonates à une condensation pour obtenir un polycarbonate à poids moléculaire élevé.

**2.** Procédé selon la revendication 1, caractérisé en ce que les oligocarbonates sont constitués par des diphénols répondant à la formule (I)

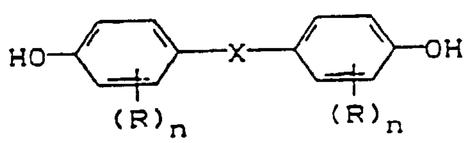

(I)

dans laquelle

X représente un radical alkylidène en $C_1$-$C_8$ ou un radical cycloalkylidène en $C_5$-$C_{12}$, S, $SO_2$ ou encore une liaison simple,

R représente un groupe méthyle, un atome de chlore ou un atome de brome, et

n représente 0, 1 ou 2,

et possèdent un poids moléculaire moyen (moyenne en poids) $\overline{M}w$ de 2.000 à 20.000.

**3.** Procédé selon la revendication 1, dans lequel on obtient les polymères greffés (B) de type ABS par polymérisation par greffage conformément à un procédé de polymérisation en masse ou en solution, de

B.1 à concurrence de 50 à 99 parties en poids, un mélange constitué par

B.1.1 à concurrence de 50 à 99 parties en poids, le styrène, l'a-méthylstyrène, des styrènes substitués au

noyau, des méthacrylates d'alkyle en $C_1$-$C_8$, ou encore des mélanges de ces constituants, et

B.1.2 à concurrence de 50 à 1 parties en poids, l'acrylonitrile, le méthacrylonitrile, des méthacrylates d'alkyle en $C_1$-$C_8$, des acrylates d'alkyle en $C_1$-$C_8$, l'anhydride maléique, des maléimides N-alkyl- ou N-arylsubstitués, ou encore des mélanges de ces constituants, en présence de

B.2 à concurrence de 1 à 50 parties en poids, un caoutchouc copolymérisable avec B.1.1 et B.1.2, possédant une température de transition vitreuse < 10°C.

**4.** Procédé selon la revendication 1, caractérisé en ce qu'on ajoute le polymère greffé (B) de type ABS en une quantité de 0,1 à 99,9% en poids (rapportés à 100% en poids constitués par A + B).

**5.** Procédé selon la revendication 1, caractérisé en ce qu'on ajoute le polymère greffé (B) de type ABS en une quantité de 10 à 90% en poids (rapportés à 100% en poids constitués par A + B).

**6.** Procédé selon la revendication 1, caractérisé en ce que le composant B.2 est le polybutadiène.

**7.** Mélanges polymères de polycarbonate et d'un polymère greffé (B) de type ABS, préparés conformément au procédé selon les revendications 1 à 7.